# EUROPEAN PATENT APPLICATION

(11) **EP 2 022 600 A1**
(43) Date of publication of application: **11.02.2009**
(21) Application number: 08252664.1
(22) Date of filing: 11.08.2008
(51) Int. Cl.: B23P 6/00, F01D 5/00, B29C 73/04

(54) **Replacement of a lubricant layer bonded to a part of a gas turbine engine**

(30) Priority: 09.08.2007 US 891253
(71) Applicant: United Technologies Corporation, Hartford, CT 06101 (US)
(72) Inventor: Holland, Brian K., Lansing, MI 48911 (US); Watson, Charles R., Windsor, CT 06095 (US); Bogue, William F., Hebron, CT 06248 (US); Hertel, Christopher J., Wethersfield, CT 06109 (US)
(74) Representative: Tomlinson, Kerry John

(57) **Abstract**

A method and system is described herein for repairing a part used in a gas turbine engine (10), which has a damaged or worn lubricant layer (40) bonded to a surface of the part. After removing the damaged or worn lubricant layer (40), a polymeric adhesive (72; 174) may be used to attach a replacement lubricant layer to the metal surface. The polymeric adhesive may be a film (72) or a paste (174). In some embodiments, the adhesive includes a non-metallic filler. The polymeric adhesive (72; 174) is stable at an operating temperature of the part to which it is attached. In one embodiment, the adhesive is polyimide, which is well-suited for use in a high pressure compressor (18) of the gas turbine engine (10) that operates at high temperatures. In other embodiments, the adhesive is bismaleimide (BMI) or cyanate ester.

## Description

### BACKGROUND

The present invention relates to a method and system for repairing a part having a damaged dry lubricant layer. More specifically, the present invention relates to using a high- temperature polymeric adhesive to replace a dry lubricant layer that is bonded to a composite or metal part used in a gas turbine engine.

Certain fabrics may be used to provide a dry lubrication system for two contacting surfaces, commonly metals, that may otherwise wear and/or have a high coefficient of friction. For example, a fabric containing polytetrafluoroethylene (PTFE) may commonly be attached to various metal parts used in gas turbine engines. An adhesive layer is used to bond the fabric to the metal surface. During service, the fabric may become worn and require replacement.

In some cases, the dry lubricant fabric may be used in an area of the engine, such as the high pressure compressor (HPC), which operates at high temperatures. Consequently, it may be important that the selected fabrics and adhesives be durable at an operating temperature of the part to which they are bonded. For areas of the engine that have lower stress, it is common to use a dry lubricant film to provide lubricity and protect against wear. The films, which may include PTFE and polyimide, are bondable to the surface of the part by the same techniques as the fabrics.

Most of the high-temperature adhesives historically used contain hazardous materials prior to cure and require extensive measures for safe usage. There is a need for an improved method and system of replacing the lubricant layer using less hazardous adhesives.

### SUMMARY

The present invention relates to a method and system for repairing a part of a gas turbine engine that has a damaged or worn lubricant layer bonded to a composite or metal surface of the part. The lubricant layer covers the surface of the part and provides lubricity to reduce wear and reduce the coefficient of friction between the part and a second surface that the part contacts. The method includes removing the damaged or worn lubricant layer. A polymeric adhesive is used to bond a replacement dry lubricant layer, which may be a fabric or a film, to the surface of the part. The polymeric adhesive is durable at the operating temperature of the part. The adhesive may be applied as a film or a paste, and in some embodiments, may include a non-metallic filler.

### BRIEF DESCRIPTION OF THE DRAWINGS

FIG. 1 is a perspective view of a gas turbine engine, including a high pressure compressor (HPC).
FIG. 2 is an enlarged view of a portion of the gas turbine engine of FIG. 1, illustrating one of a plurality of stages of the HPC having variable vane stems that extend through an outer case of the engine and are attached to a synchronization ring.
FIG. 3 is a perspective view of a centralizing pad, which is also attached to the synchronization ring and configured to position the synchronization ring on the outer case.
FIG. 4 is a schematic of the centralizing pad from FIG. 3, rotated approximately 180 degrees relative to FIGS. 2 and 3.
FIG. 5 is a top view of the centralizing pad of FIG. 4 to illustrate a fabric layer on the centralizing pad that has become worn or damaged over time.
FIG. 6 is a block diagram illustrating a method of replacing a damaged fabric layer on a centralizing pad.
FIG. 7 is a schematic of the centralizing pad of FIG. 4 with a replacement fabric and a film adhesive.
FIG. 8 is a schematic of the centralizing pad of FIG. 7 illustrating an alternative embodiment of a replacement fabric and a paste adhesive.

### DETAILED DESCRIPTION

A method is described herein for repairing a part of a gas turbine engine that has a dry lubricant layer bonded to a surface of the part. The dry lubricant layer may be a fabric or a film, and is configured to provide lubricity between the part and a second surface that the part contacts. The part is formed from metal or a composite, and may commonly be located in an area of the engine that operates at high temperatures. Over time, the dry lubricant layer may become damaged or worn. As described herein, a less hazardous polymeric adhesive, which is stable at an operating temperature of the part, may be used to attach a replacement lubricant layer to the surface of the part. The polymeric adhesive may be a paste adhesive or a supported film adhesive.

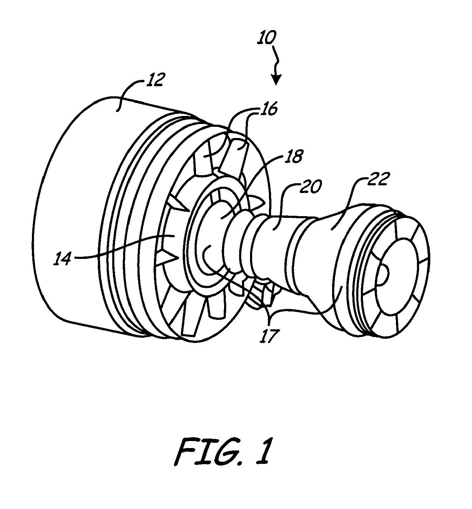

FIG. 1 is a perspective view of a high bypass gas turbine engine assembly 10, including intermediate case 12, fax exit liner segments 14, struts 16, and outer casing 17, which is encased around high pressure compressor (HPC) 18, high pressure turbine 20, and low pressure turbine 22.

High pressure compressor (HPC) 18 includes a plurality of stages. Each stage has a row of blades and a row of stator vanes (not shown in FIG. 1), which are variable camber vanes. Each of the vanes includes a vane stem that extends out of casing 17.

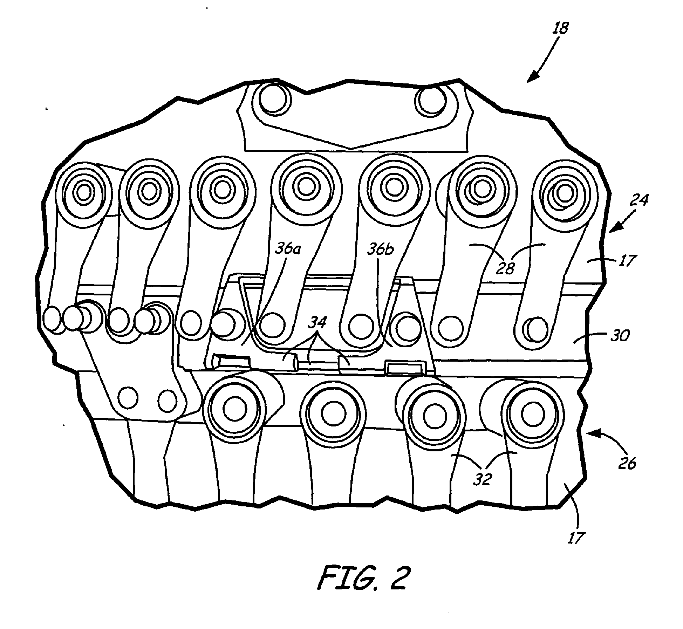

FIG. 2 is an enlarged view of a portion of outer casing 17 of FIG. 1 in an area surrounding high pressure compressor 18. As shown in FIG. 2, high pressure compressor (HPC) 18 includes first stage 24 and second stage 26. Each of the vane stems of first stage 24 extending out of casing 17 are attached to a lever arm 28. (The number of lever arms 28 in first stage 24 is equal to the number of vanes in first stage 24.) All of lever arms 28 are connected to synchronization ring 30, which surrounds and attaches to casing 17. Synchronization ring 30 allows for an angle of all of the first stage vanes to be changed simultaneously to control back pressure by adjusting the percent open area at that stage in the airflow. The vane stems of second stage 26 similarly extend out of casing 17 and are attached to lever arms 32, which are only partially visible in FIG. 2. Lever arms 32 of second stage 26 are similarly attached to a second synchronization ring (not shown) that facilitates simultaneous adjustment of an angle of the second stage vanes.

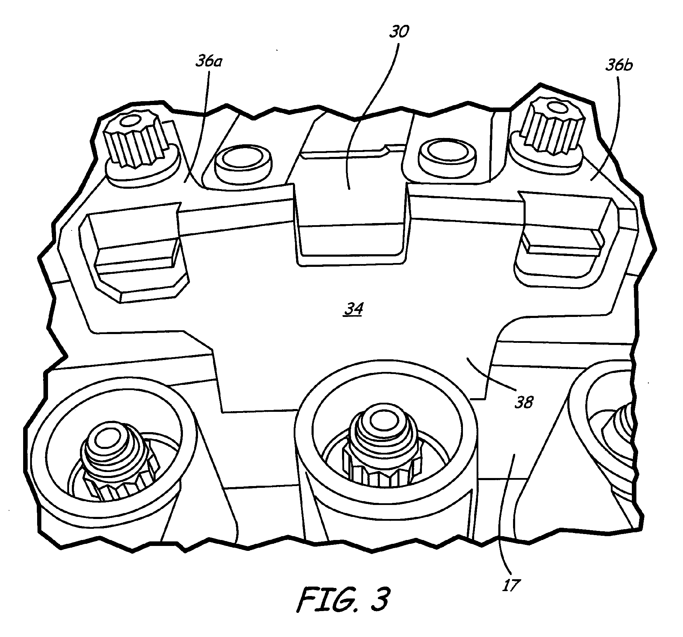

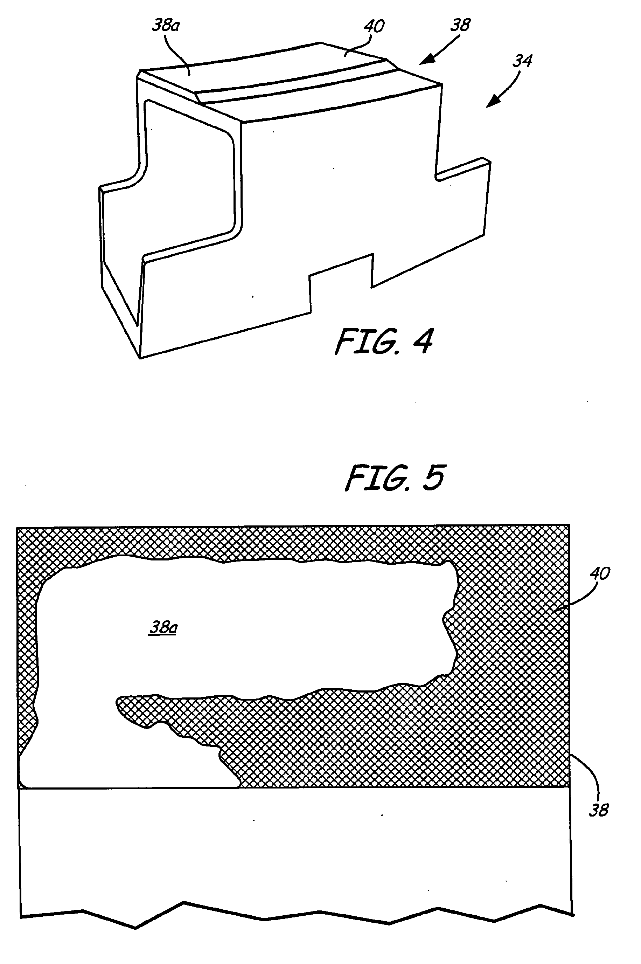

Centralizing pad 34, as better shown in FIGS. 3 and 4, is used to position synchronization ring 30 around casing 17 to maintain a centerline of ring 30 concentric to a centerline of casing 17. FIG. 3 is a side view of an enlarged portion of FIG. 2 to show centralizing pad 34 attached to synchronization ring 30 at top portions 36a and 36b. Bottom portion 38 of centralizing pad 34 contacts an outer surface of casing 17. Both outer casing 17 and centralizing pad 34 are commonly made of metal, including, but not limited to titanium, stainless steel and nickel. In an exemplary embodiment, centralizing pad 34 is formed of stainless steel. A dry lubricant layer may be attached to bottom portion 38 of pad 34 to provide a dry lubrication system and reduce a coefficient of friction between the contacting surfaces of centralizing pad 34 and casing 17.

FIG. 4 is a perspective view of centralizing pad 34. As shown in FIG. 4, centralizing pad 34 has been rotated approximately 180 degrees relative to its position in FIGS. 2 and 3. Bottom portion 38 of centralizing pad 34 includes raised portion 38a, to which lubricant layer 40 is attached. As discussed in more detail below, lubricant layer 40 is bonded to the metal surface of raised portion 38a. In one embodiment, lubricant layer 40 is a fabric. Suitable materials for fabric layer 40 may include, but are not limited to, polytetrafluoroethylene (such as Teflon^{®} PTFE from DuPont) and a woven hybrid of PTFE and fiberglass.

During service, fabric layer 40 will become worn or damaged and require repair or replacement. FIG. 5 is a top view of bottom portion 38 of centralizing pad 34 of FIG. 4. As shown in FIG. 5, fabric layer 40, which is attached to raised portion 38a, has been damaged and in some areas, fabric layer 40 is worn through and the metal surface of raised portion 38a is exposed. Because it is costly to replace the entire centralizing pad 34, it is desirable to replace fabric layer 40 and reuse centralizing pad 34.

Damaged fabric layer 40 may originally be attached to bottom portion 38 using a high-temperature adhesive, due to the extreme operating temperatures within HPC 18. Historically, in some cases, adhesives that were used for bonding fabric layer 40 to bottom surface 38 may be hazardous. A method and system is disclosed herein for replacing damaged fabric layer 40 using less hazardous materials.

In the exemplary embodiment described herein, lubricant layer 40 is a fabric layer. It is recognized that a dry lubricant film may also be used, particularly for lower stress areas. The dry lubricant films are bondable to the surface of the part using the same techniques described herein for fabric layer 40 and provide a similar function. These films may commonly include integral fillers, which provide greater compressive stability. Examples include, but are not limited to, a PTFE film or a thermoplastic polyimide film, such as Kapton^{®} polyimide film from Dupont or Upilex^{®} polyimide film from UBE Industries.

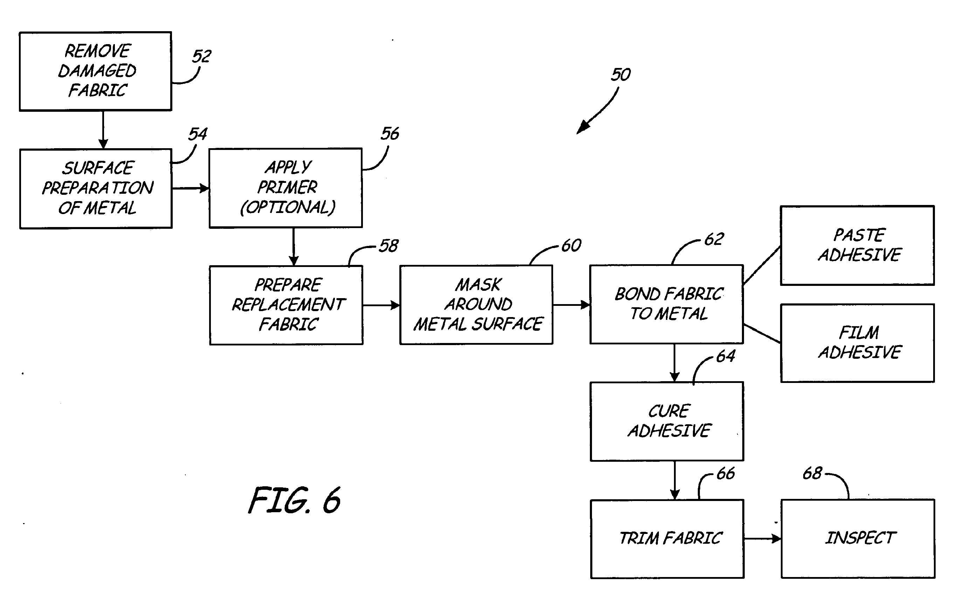

FIG. 6 is a block diagram illustrating method 50 for replacing a damaged fabric layer on a centralizing pad of a high pressure compressor, as shown in FIGS. 1-5. Centralizing pad 34 is an example of a metal part used in a gas turbine engine that includes a fabric layer configured for providing lubricity between centralizing pad 34 and a corresponding metal surface. It is recognized that method 50 is not limited to centralizing pads and may be used for various other parts that benefit from having a lubrication layer between two contacting metal surfaces, especially actuation systems.

Method 50 includes steps 52-68, and begins with removing the original, damaged or worn fabric layer (step 52) from the bottom of the centralizing pad (see FIG. 4). The original fabric layer may be mechanically stripped off of the centralizing pad. Any remaining fabric and adhesive may be removed by degrading the adhesive. This may be accomplished, for example, by placing the centralizing pad in an air furnace or by cleaning the centralizing pad using an alkalai cleaning fluid, which chemically degrades the adhesive. A next step in method 50 is surface preparation of the newly exposed metal surface of the centralizing pad (step 54), using appropriate techniques for preparing the surface for bonding, such as, but not limited to, anodizing and grit blasting. If grit blasting is used, the other exposed surfaces of the centralizing pad may be masked to avoid overspray of the grit blast beyond the surface where the fabric is to be attached. Loose grit from the metal surface that results from grit blasting may then be removed using a vacuum.

Step 56, which is applying a primer to the metal surface, is optional and is included in method 50 if a replacement fabric is not going to be bonded to the metal surface within approximately two hours after step 54. In step 56, suitable primers may include, but are not limited to, solvent reductions of the adhesive resin system. The primer may then be dried and cured. Next, in step 58, the replacement fabric is prepared, which may include cutting an appropriately sized piece of fabric to fit the pad. It is preferable to cut an oversize piece of fabric and later trim the fabric (step 66) after it is bonded to the metal surface of the pad. Prior to bonding the fabric to the metal surface (step 62), a mask is created around the bond area (step 60), using, for example, a Kapton^{®}-backed flash break tape or other types of approved maskants.

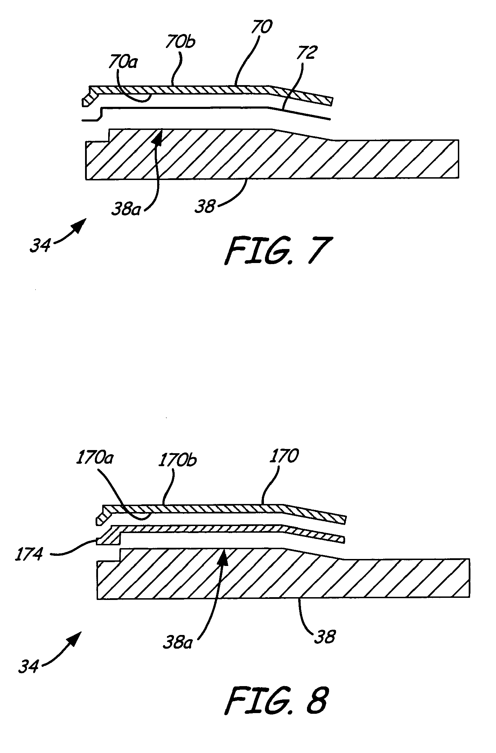

At this point, the metal surface of the centralizing pad is ready for receiving a replacement fabric. The replacement fabric is bonded to the metal surface (step 62) using a polymeric adhesive, such as a film adhesive and/or a paste adhesive, as described in further detail below in reference to FIGS. 7 and 8. In preferred embodiments, the polymeric adhesive is non-hazardous. As described above, method 50 may be used for other parts of the gas turbine engine. It is important that the polymeric adhesive be stable at an operating temperature of the part. As such, the selected adhesive may depend on the area of the engine where the part is used. In the exemplary embodiment in which the fabric layer is bonded to a centralizing pad used in the high pressure compressor (HPC) of the engine, the selected adhesive is preferably able to withstand the high operating temperatures of the HPC. For example, the HPC may operate at a temperature ranging from approximately 300 to 650 degrees Fahrenheit (149 to 343 degrees Celsius). In contrast, other areas forward and outboard of the HPC may operate at lower temperatures. Examples of suitable adhesives for this application are provided below.

After bonding the replacement fabric to the metal surface, a next step is to cure the adhesive (step 64). In step 66, excess fabric is trimmed off. Although step 66 is shown after curing (step 64), it is recognized that the excess fabric may be removed prior to curing. Finally, in step 68, the repaired centralizing pad is inspected for various criteria.

In addition to metal parts, method 50 also may be used for composite parts that have a dry lubricant layer bonded to a surface of the composite. The composite part may be formed of high temperature materials, which may include, for example, polyimide. In those cases in which the part is a composite, some of the steps in method 50 may be altered or omitted. For example, surface preparation (step 54) of the composite may be different than the process described above for a metal part as will be understood by those skilled in the art.

FIG. 7 is an exploded cross-sectional view of bottom portion 38 of centralizing pad 34 from FIG. 4, after replacement fabric 70 has been bonded to raised portion 38a using film adhesive 72. In an exemplary embodiment, fabric 70 may be a hybrid of fiberglass and PTFE woven together. A fiberglass-rich side 70a of fabric 70 provides a bondable surface for attaching to raised portion 38a and a PTFE-rich side 70b creates a low friction surface (for contact with casing 17).

As stated above, as an alternative to a fabric, a PTFE film or a polyimide film may be used as the dry lubricant layer. In both cases (fabric or film), it is necessary to make the surface of the lubricant layer more bondable to the surface of the part (i.e. raised portion 38a of pad 34). In the case of replacement fabric 70, the fabric may include a more bondable material, such as glass or polyaramid (for example, Nomex^{®} meta-aramid fibers from Dupont), as part of the fabric architecture. For the PTFE or thermoplastic polyimide films, the surface may be etched prior to attaching the film to raised portion 38a.

In order to bond fabric layer 70 to raised portion 38a, a polymeric adhesive is attached to raised portion 38a. The polymeric adhesive may be a film, as shown in FIG. 7 as film adhesive 72. Alternatively, a polymeric adhesive paste may be used, as shown in FIG. 8 and described further below. Regardless of whether the adhesive is a film or a paste, the selected polymeric material is stable at an operating temperature of centralizing pad 34. This is described in further detail below.

Film adhesive 72 is attached as a sheet to raised portion 38a and is used to bond replacement fabric 70 to raised portion 38a. In some embodiments, it may be preferred that film adhesive 72 has a minimum thickness. However, in applying a thin adhesive layer, it may be difficult to ensure a uniform thickness across raised portion 38a. An advantage of using film adhesive 72 is an ability to better control the cured thickness of the adhesive, particularly in those embodiments in which film adhesive 72 is a supported film adhesive.

Prior to placement of film adhesive 72 on surface 38a, film adhesive 72 is partially cured, such that flow of the adhesive at room temperature may be limited. Moreover, a film adhesive is premixed and mitigates mixing error, and is typically easier to apply; thus it can minimize voids or entrapped air between raised portion 38a and adhesive 72. For film adhesives, the processing requirements to meter out the material and calendar the film limit the minimum economical batch size, thus limiting the variations of filler material available.

In some embodiments, film adhesive 72 is a supported film adhesive, which aids in handling of the adhesive. In one embodiment, film adhesive 72 may include a scrim support that is made, for example, of fiberglass, which is also able to withstand high operating temperatures. The support aids in processing of the film and in controlling an adhesive thickness. Other examples of suitable support materials include, but are not limited to, carbon fiber, nylon, polyester, and other low-density or non-woven materials. The particular support material is chosen, in part, based on the type of film adhesive to be attached to the support, and the temperatures that the support will be exposed to.

The scrim side of film adhesive layer 72 contacts the surface of raised portion 38a. In some embodiments, at room temperature, film adhesive 72 may have a low enough viscosity such that when adhesive 72 is compressed by fabric 70, a portion of adhesive 72 may flow across the surface of portion 38a. As such, the thickness of adhesive 72 may not remain uniform across portion 38a. The scrim support may be used to control flow of the adhesive and ensure a minimum and uniform thickness of adhesive layer 72.

A manufacturing process for supported film adhesive 72 is similar to that of a pre-impregnated material (i.e. prepreg) in which resin is impregnated into a fiber matrix and then cured. For a supported film adhesive like adhesive 72, a liquid resin is applied to the scrim support to form a sheet of film adhesive. In some embodiments, the resin is then staged to remove some of the solvent from the resin. The supported film adhesive is commonly rolled up and stored at low temperatures. The supported film adhesive may also include a carrier layer, such as polyethylene, that is removed just prior to placement of adhesive film 72 on the surface of raised portion 38a.

Film adhesive 72 includes polymeric adhesives that are stable at an operating temperature of centralizing pad 34, which may operate at temperatures ranging from 300 to 650 degrees Fahrenheit (149 to 343 degrees Celsius). Polyimide adhesives are well-suited for centralizing pad 34, since they are able to resist wear and withstand the high temperatures in the HPC. Both addition-formed polyimides and condensation polyimides may be used for film adhesive 72. In some cases, the condensation polyimides may have a higher thermal oxidative stability, as compared to the addition polyimides.

One example of a suitable polyimide film adhesive is FM 680 from Cytec Industries, which is stable at temperatures up to approximately 650 degrees Fahrenheit (343 degrees Celsius). FM 680 is derived from the Avimid-N family from Cytec Industries and is a condensation polyimide with high thermal oxidative stability. Another suitable polyimide film adhesive is FM 57 from Cytec Industries, which is stable at operating temperatures up to approximately 450 to 550 degrees Fahrenheit (232 to 288 degrees Celsius). FM 57 is a condensation polyimide and is derived from the Avimid-R family from Cytec Industries. The particular polyimide film adhesive used may vary depending, in part, on the particular repair application and the range of the operating temperature of the part. Other polymeric film adhesives with a thermal oxidative stability comparable to polyimide may also be used for film adhesive 72.

In other embodiments, film adhesive 72 may include bismaleimide (BMI) film adhesives and cyanate ester film adhesives. Bismaleimide (BMI) is stable at temperatures up to approximately 425 degrees Fahrenheit (218 degrees Celsius). Examples of BMI film adhesives are FM 2550 from Cytec Industries and HP655 from Hexcel. Cyanate ester is stable at temperatures up to approximately 500 degrees Fahrenheit (260 degrees Celisuis). An example of a cyanate ester film adhesive is FM 2555 from Cytec Industries. Cyanate ester films are also available from YLA Inc.

FIG. 8 is another exploded cross-sectional view of the centralizing pad of FIG. 7 illustrating an alternative embodiment of replacement fabric layer 170 and paste adhesive layer 174, which may be used instead of film adhesive 72 of FIG. 7 for bonding adhesive layer 174 to surface 38a.

Similar to film adhesive 72, paste adhesive layer 174 is a polymeric adhesive that is stable at an operating temperature of centralizing pad 34. As compared to film adhesives, a batch size for paste adhesives may be much smaller, thus resulting in a greater range of available commercial products with metallic and non-metallic fillers. Additionally, an advantage of paste adhesives is that they usually have a longer storage life, compared to film adhesives which are premixed and then frozen to retard the reaction rate. A second advantage of using paste adhesives in repair methods is that corrosion pits and tool marks in the substrate may be filled concurrent with bonding.

Paste adhesive layer 174 may be formed from polyimide, which is stable at high operating temperatures (up to approximately 650 degrees Fahrenheit or approximately 343 degrees Celsius). Suitable polyimides for paste adhesive 174 include, but are not limited to MVK-19, AFR-PE-4 and BIM from Maverick Corporation. In other embodiments in which centralizing pad 34 operates at a lower temperature, other suitable polyimide adhesives include, but are not limited to, bismaleimide (BMI) and cyanate ester. As stated above, bismaleimide (BMI) is stable at temperatures up to approximately 425 degrees Fahrenheit (218 degrees Celsius), and cyanate ester is stable at temperatures up to approximately 500 degrees Fahrenheit (260 degrees Celsius). Moreover, all of the disclosed paste adhesives may be used for the repair of other parts in the engine, and the particular adhesive selected is based on the operating temperature of the part.

Paste adhesive layer 174 uses a non-metallic filler. By using a non-metallic filler, polymeric adhesive 174 avoids any galvanic interaction between metal in the paste and the metal surface of raised portion 38a. Using a non-metallic filled adhesive, corrosion of a metallic-filler at the exposed surface between the fabric tows may be avoided. Suitable fillers that may be used in paste adhesive 174 include, but are not limited to, silica, thermoplastics and other commercially available products that thicken and limit flow of the paste. In some embodiments, film adhesive 72 of FIG. 7 may also use a non-metallic filler.

In order to bond fabric layer 170 to surface 38a, polymeric paste adhesive 174 is applied to a fiberglass-rich side 170a of fabric layer 170. A thin layer of paste adhesive 174 may also be applied to surface 38a. Once applied, a thickness of paste adhesive layer 174 may be between approximately 0.25 mm (10 mils) and approximately 0.51 mm (20 mils). A thickness of layer 174 may be minimized, in some embodiments, to prevent cohesive failure.

As described above in reference to method 50, after bonding fabric layers 70 and 170 to metal surface 38a (step 62), a subsequent step is to cure the polymeric adhesive.

The replacement of a fabric or film layer using a polymeric adhesive is described herein in the context of a centralizing pad, which is designed to keep a synchronization ring of the high pressure compressor centered concentrically to the casing of the turbine engine. The fabric or film layer provides a lubrication surface between the contacting surfaces of the centralizing pad and the casing. The disclosed polymeric adhesives are less hazardous than other materials that may be used, yet are well-suited for withstanding high temperatures within the high pressure compressor.

It is recognized that the method and system described herein for using polymeric adhesives to attach a dry lubricant layer to a metal surface may apply to other parts of the turbine engine that have contacting surfaces that may require or benefit from a dry lubrication layer located between them. As one example, a fabric layer, similar to those described above, may be used to provide lubricity between a bushing and a vane stem extending from the shroud to the outer casing of the engine. Another includes the rub surfaces of articulating linkage arms/bars. In addition to polyimide, other non-hazardous polymeric adhesives are disclosed herein, which may be used in other areas of the gas turbine engine for bonding a lubricant layer to a metal or composite part.

Although the present invention has been described with reference to preferred embodiments, workers skilled in the art will recognize that changes may be made in form and detail without departing from the scope of the invention as defined by the following claims and the equivalents thereto.

## Claims

1. A method of repairing a part used in a gas turbine engine (10) and having a damaged lubricant layer (40) bonded to a surface of the part, the method comprising:
removing the damaged lubricant layer (40) from the surface of the part used in a gas turbine engine(10);
attaching a polymeric film adhesive (72) to the surface of the part, wherein the polymeric film adhesive (72) is stable at an operating temperature of the part; and
attaching a replacement lubricant layer to the polymeric film adhesive (72).

2. The method of claim 1 further comprising:
preparing the surface for bonding prior to attaching the polymeric film adhesive (72) to the surface.

3. The method of claim 2 further comprising:
applying a primer to the surface after preparing the surface for bonding.

4. The method of any preceding claim wherein the replacement lubricant layer is a fabric (70) that includes at least one of fiberglass and polytetrafluoroethylene (PTFE).

5. The method of any of claims 1 to 4 wherein the replacement lubricant layer is a film that includes at least one of polytetrafluoroethylene (PTFE) and polyimide.

6. The method of any preceding claim wherein the polymeric film adhesive (72) is a polyimide film.

7. The method of any of claims 1 to 5 wherein the polymeric film adhesive includes at least one of bismaleimide (BMI) and cyanate ester.

8. The method of any preceding claim wherein the polymeric film adhesive is attached to a scrim support.

9. The method of any preceding claim wherein the part is a component in a high pressure compressor (18) of the gas turbine engine (10).

10. The method of any preceding claim further comprising:
curing the polymeric film adhesive (72) and the replacement lubricant layer.

11. A system for repairing a part used in a gas turbine engine (10) and having a damaged lubricant layer (40) bonded to a surface of the part, the system comprising:
means for removing the damaged lubricant layer (40) from the surface of the part used in a gas turbine engine (10);
a polymeric film adhesive (72) that is stable at an operating temperature of the part and configured to attach to the surface of the part; and
a replacement lubricant layer configured to attach to and compress the polymeric film adhesive (72).

12. The system of claim 11 wherein the polymeric film adhesive (72) includes at least one of polyimide, bismaleimide (BMI) and cyanate ester.

13. The system of claim 11 or 12 wherein the system is curable after attaching the replacement lubricant layer to the polymeric film adhesive (72) in order to bond the replacement lubricant layer to the surface of the part.

14. The system of any of claims 11 to 13 wherein the replacement lubricant layer comprises at least one of:
a woven hybrid of fiberglass and polytetrafluoroethylene (PTFE); and
a film including at least one of polytetrafluoroethylene (PTFE) and polyimide.

15. A repaired part used in a gas turbine engine (10), the part comprising:
a surface configured to contact a second surface of a second part;
a lubrication layer covering the surface and configured to reduce a coefficient of friction between the part and the second part; and
a polymeric adhesive (72; 174) having a non-metallic filler and located between the lubrication layer and the surface of the part to bond the lubrication layer to the surface, wherein the polymeric adhesive (72; 174) is stable at an operating temperature of the part.
